# FASCICULE DE BREVET EUROPEEN

(11) **EP 2 107 844 B1**
(45) Date de publication et mention de la délivrance du brevet: **29.06.2011**
(21) Numéro de dépôt: 08290320.4
(22) Date de dépôt: 02.04.2008
(51) Int. Cl.: H04W 48/04, H04W 64/00

(54) **Procédé et système de communication par localisation d'un terminal mobile en fonction d'une zone de référence**
Kommunikationsverfahren und -system durch Lokalisierung eines mobilen Endgeräts in Abhängigkeit einer Referenzzone
Method and system for communicating by locating a mobile terminal according to a reference area

(43) Date de publication de la demande: 07.10.2009
(73) Titulaire: Quescom, 06560 Valbonne (FR)
(72) Inventeur: Oros, Philippe, 06250 Mougins (FR); Madenian, Marc, 91190 Gif-sur-Yvette (FR)
(74) Mandataire: Novagraaf Technologies

(56) Documents cités:
- EP-A- 0 615 353
- EP-A- 1 777 916
- US-A1- 2005 239 441
- US-A1- 2007 270 157

## Description

### DOMAINE TECHNIQUE DE L'INVENTION

L'invention se rapporte à un procédé de communication par localisation d'un terminal mobile en fonction d'une zone de référence et à un système pour la mise en oeuvre de ce procédé.

L'invention se rapporte au domaine des systèmes de télécommunication, et plus particulièrement au domaine de la gestion des communications entrantes dans des architectures de convergence fixe-mobile.

### ETAT DE LA TECHNIQUE ANTERIEURE

L'évolution des technologies de la télécommunication a engendré l'apparition de nombreux terminaux mobile permettant d'échanger des informations. Certains de ces terminaux sont dits bi-mode et confèrent l'avantage de pouvoir se connecter à des réseaux conventionnels de services de téléphonie mobile tels que GSM/UMTS/CDMA et à des réseaux informatique sans fils basé sur des technologies telles que le WiFi ou Bluetooth.

Ces terminaux ont facilité l'apparition d'une nouvelle ère technologique connue sous le nom de FMC : convergence fixe-mobile.

Une architecture de FMC a pour vocation d'harmoniser et d'unifier l'utilisation de terminaux de communication, filaires et radioélectriques. Ainsi, des utilisateurs utilisant cette convergence fixe-mobile peuvent à partir de leur terminal mobile passer des communications à partir de l'un ou l'autre des deux réseaux fixes ou mobiles.
On connaît dans l'art antérieur, la demande US 2007270157 décrivant un procédé de localisation d'un terminal mobile à l'aide des données relatives à des balises situées dans son voisinage.
La mise en oeuvre d'une telle architecture consiste, par exemple, à paramétrer le terminal mobile avec deux numéros permettant de l'identifier dans chacun des deux réseaux. Dans ce cadre le protocole SIP (Session Initiation Protocol) est généralement utilisé pour l'établissement d'une session de communication entre le terminal mobile avec un autre terminal sur l'un des réseaux. Ainsi des communications peuvent être exécutées à partir d'un des deux réseaux et peuvent être reçues à partir des deux numéros de manière opaque pour l'usager.

Cependant, un problème se pose de pouvoir au travers d'une telle architecture assigner un unique identifiant dans les deux réseaux télécommunication distincts, fixe et mobile.

En effet, l'un des intérêts d'une architecture FMC est de permettre à un utilisateur de pouvoir joindre ou être joint :
- à partir d'un terminal le plus approprié à un instant donné, par exemple son poste téléphonique fixe s'il est dans son bureau/domicile ou son terminal cellulaire dans toutes les autres situations ;
- sur un numéro unique communiqué à ses correspondants afin d'éviter les tentatives multiples d'appels sur des numéros d'annuaires distincts, par exemple ses numéros de téléphone fixe ou mobile, et
- en optimisant les coûts des communications.

On connaît dans l'art antérieur, la demande internationale WO2005/104597 décrivant un procédé consistant à intégrer un réseau mobile dans un réseau fixe à partir d'une technologie nommée UMA (acronyme de Unlicensed Mobile Access). Cette technologie permet de remplacer la couche physique du réseau GSM (acronyme de Global System for Mobile Communications, est une norme de téléphonie mobile), UMTS (acronyme de Universal Mobile Telecommunications System, est une norme de téléphonie mobile) ou encore GPRS (acronyme de General Packet Radio Service, est une norme de téléphonie mobile) par des bandes de fréquences libre d'utilisation correspondant à celles de technologies comme le WiFi ou encore le Bluetooth. Lorsque le terminal mobile détecte un point d'accès auquel il peut se raccorder, il établit une connexion à travers une passerelle vers un contrôleur UMA au travers d'un mécanisme standard d'authentification utilisant l'identifiant stocké dans la carte SIM de l'abonné. Le terminal mobile reçoit une adresse IP dans le réseau interne UMA, et encapsule le protocol GSM dans le protocole IP. Le contrôleur UMA désencapsule le protocole GSM du protocole IP fait suivre le trafic dans le réseau GSM, faisant apparaître le mobile comme provenant d'un autre relais GSM. Ainsi, lorsque le terminal mobile passe d'un réseau GSM vers un réseau WiFi, le coeur du réseau téléphonique considère simplement que le mobile a changé de relais GSM, comme pour un handover GSM classique. Le terminal est alors identifié à partir d'un numéro.

Toutefois, l'inconvénient d'un tel procédé réside dans le fait que sa mise en oeuvre au sein d'architecture réseau de télécommunication existante est complexe et onéreuse. En effet, sa mise en oeuvre nécessite l'installation d'équipements spéciaux tels que des contrôleurs UMA ou encore des concentrateurs particuliers, ce qui nécessite de modifier le réseau.

### EXPOSE DE L'INVENTION

La présente invention vise à résoudre le problème lié aux difficultés techniques rencontrées pour la mise en oeuvre d'une architecture FMC comportant un numéro (ou identifiant) unique pour un terminal mobile donné, sans modifier le réseau existant.

L'invention propose d'améliorer les performances des mécanismes de localisation d'un terminal mobile par rapport à une zone de référence à partir d'un dispositif particulier de prise de mesure associée à un traitement informatique.

Plus précisément, l'invention a pour objet un procédé de communication par localisation d'un terminal mobile en fonction d'une zone de référence, ladite zone étant disposée dans un champ électromagnétique provenant d'au moins un équipement émetteur/récepteur et comprenant un équipement de référence, dans lequel ledit procédé comprend les étapes suivantes :
- transmission réitérée par l'équipement de référence au terminal mobile des données relatives au champ électromagnétique d'au moins un des équipements émetteurs/récepteurs, lesdites données se rapportant à une valeur de référence R de champ électromagnétique et à un identifiant pour chaque équipement émetteur/récepteur,
- mesure M, par le terminal mobile du champ électromagnétique provenant d'au moins un des équipements émetteurs/récepteurs environnants identifié(s) par son identifiant,
- localisation dudit terminal mobile par rapport à la zone de référence (6) en fonction de l'écart absolu |R-Mₜ| comparé à des valeurs Dmin et Dmax de sorte que si |R-Mₜ| < Dmin le terminal mobile se trouve dans la zone de référence (6) et si |R-Mₜ| > Dmax le terminal mobile se trouve hors de la zone de référence (6), et
- transmission d'au moins une communication soit par réseau domestique soit par réseau mobile selon que la localisation du terminal mobile est, respectivement, dans la zone de référence ou hors de cette zone selon l'étape précédente.
Selon des modes de réalisation particuliers:
- la valeur de référence R est modifiée ou inchangée si respectivement, l'écart absolu |R-M| est inférieur ou supérieur à un seuil S, la valeur M étant une mesure courante du champ électromagnétique réalisée par l'équipement de référence ;
- lorsque l'écart absolu |R-M| est supérieur à S, cet écart est calculé pour un nombre successif de mesures M afin de vérifier à chaque mesure si la valeur de référence R est modifiée ou inchangée au regard de la valeur seuil S;
- R est égal à la somme des champs supérieur à une valeur plancher de base, selon une métrique ;
- les valeurs minimales et maximale Dmin et Dmax sont des paramètres systèmes configurables;
- le terminal n'est pas situé dans la zone de référence, si au moins un équipement émetteur/récepteur n'est pas identifié à la fois par le terminal et l'équipement de référence;
- le terminal mobile envoi audit équipement de référence des données se rapportant à sa localisation par rapport à la zone de référence, et
- la valeur plancher est un paramètre configurable dont la valeur par défaut est égale à - 85 dBm.

Plus précisément, L'invention se rapporte également à un système de communication par localisation d'un terminal mobile en fonction d'une zone de référence, pour la mise en oeuvre du procédé selon l'une quelconque des revendications précédentes, ladite zone étant disposée dans un champ électromagnétique provenant d'au moins un équipement émetteur/récepteur, et comprenant un équipement de référence, dans lequel l'équipement de référence comporte des moyens de liaison permettant d'envoyer des données avec ledit terminal mobile, ledit terminal mobile comprenant :
- des moyens de mesure de champ électromagnétique provenant d'au moins un équipement émetteur/récepteur environnant ;
- des moyens de mémoire permettant de stocker lesdites données reçues correspondant à une valeur de référence R et un identifiant dudit équipement émetteur/récepteur, et les mesures réalisées par ledit terminal ; et
- des moyens de traitement de déterminer la localisation dudit terminal mobile par rapport à la zone de référence,
ledit équipement de référence comprenant des moyens de communication permettant de réaliser la transmission d'au moins une communication soit par réseau domestique soit par réseau mobile selon que la localisation du terminal mobile est respectivement dans la zone de référence ou hors de cette zone.
Selon des modes de réalisation particuliers :
- le système comprend un commutateur téléphonique relié audit équipement de référence ;
- l'équipement de référence comprend un module de communication compatible avec les normes de téléphonie mobile ; et
- l'équipement de référence comprend des moyens de mesure du champ électromagnétique.

### BREVE DESCRIPTION DES FIGURES

D'autres caractéristiques et avantages de l'invention ressortiront à la lecture de la description qui suit, en référence aux figures annexées, qui illustrent :
- la figure 1, illustre un exemple de réalisation selon l'invention; et
- la figure 2, définie un organigramme pour la détermination d'une valeur de référence selon l'invention.

Pour plus de clarté, les éléments identiques ou similaires sont repérés par des signes de référence identiques sur l'ensemble des figures.

### DESCRIPTION DETAILLEE D'UN MODE DE REALISATION

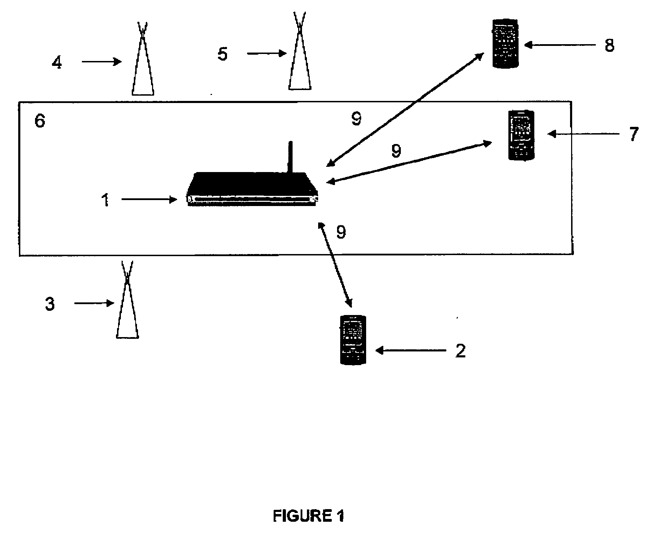

Dans un exemple de réalisation selon l'invention, la figure 1 montre un système comprenant :
- un équipement de référence 1 ;
- des équipements émetteurs/récepteurs 3,4,5 ;
- des terminaux mobiles 2,8,7.
L'équipement de référence comprend un microprocesseur associé à des moyens de mémoire, une interface de communication, permettant d'échanger des données avec les terminaux mobiles 2,7,8 au travers d'un réseau de communication. Ce réseau peut être par exemple des réseaux GSM, UMTS, HSDPA ou encore HSUPA mais pas exclusivement. Les échanges de données s'effectuent sous protocole TCP/IP ou d'autres protocoles permettant des échanges optimisés et fiables de données. Le réseau utilisé dans cette architecture fonctionnelle se rapportent à des moyens de câblage et/ou des moyens de transmission électromagnétique. Sans prétendre faire une liste exhaustive, ces moyens de câblage correspondent par exemple à de la fibre optique ou des câbles cuivrés, et les moyens de transmission électromagnétique se rapportent par exemple à des liaisons radioélectrique reposant sur des normes de téléphonie mobile comme le GSM (acronyme de Global System for Mobile Communications), UMTS (acronyme de Universal Mobile Télécommunications System), EDGE (acronyme de Enhanced Data Rates for GSM Evolution) ou encore HSDPA (acronyme de High-Speed Downlink Packet Access). Ces moyens peuvent aussi se rapporter à des technologies telles que le WIFI défini par les normes IEEE 802,11, ou le Bluetooth défini par les normes IEEE 802.15, ou encore à le WIMAX (acronyme pour Worldwide Interoperability for Microwave Access) défini par la norme IEEE 802.16.

L'équipement de référence communique avec des terminaux mobiles à partir de moyens de transmission électromagnétique, et/ou à partir d'équipements de communication auxquels il est connecté tels que des PABX, IPPBX, Centrex, Serveur FMC, ou encore Call Manager.

L'équipement récepteur se rapporte par exemple à un équipement de télécommunication mobile tel qu'un BTS (acronyme de Base Transceiver Station). Un tel équipement comprend un élément d'interface avec une station BSC (Base Station Controller, signifiant contrôleur de station base), un émetteur/récepteur (transceiver, TRX) et une antenne. Cet équipement émet un champ électromagnétique correspondant à une cellule. En effet, les réseaux de téléphonie mobile sont basés sur la notion de cellules, c'est-à-dire des zones circulaires se chevauchant afin de couvrir une zone géographique.

L'interface de communication de l'équipement de référence permet d'échanger des données avec les moyens de communication du terminal mobile. Le terminal mobile correspond, par exemple, à un téléphone mobile, à un PDA, un Smartphone, ou encore un ordinateur portable équipé d'une carte permettant de se connecter par exemple à un réseau 3G .

L'invention peut être mise en oeuvre dans une architecture FMC. Les services proposant une telle architecture, sont basés sur la connaissance de la situation d'un terminal mobile à un instant donné par rapport à une zone de référence correspondant :
- au domicile principal ou secondaire d'un utilisateur du terminal mobile, dans une utilisation personnelle,
- à un lieu de travail (bureau principal ou de passage), pour une utilisation professionnelle.
Les réseaux de téléphonie mobile ou réseaux cellulaires n'ont pas été conçus à l'origine pour proposer un service précis de localisation.

En outre, l'invention permet de déterminer, à un instant donné et avec une quasi-certitude, la position relative d'un terminal mobile par rapport à une zone de référence, domicile ou lieu de travail. Disposer de cette information contribue de façon majeure à faciliter la mise en oeuvre du numéro unique, pièce essentielle de la FMC.

De plus, l'invention est indépendante des réseaux cellulaires existants ou à venir (ex: architecture IMS) et ne requiert aucun dispositif particulier dans les équipements de réseaux tels que BTS, BSC et autres MSC et HLR dans les réseaux GSM 2G ou 2,5 G ou encore 3G.

Les normes GSM/3G imposent au terminal mobile d'effectuer en permanence des mesures radio se rapportant notamment à une mesure de l'intensité des champs électromagnétiques reçus, impliquant non seulement la cellule courante mais aussi ses voisines, six au minimum.

Cependant, la propagation des ondes radio varie dans le temps en fonction de paramètres externes divers et variés rendant ainsi inutilisable une méthode basée sur l'utilisation d'une cartographie radio établie par avance.

La zone de référence 1 est comprise dans un champ électromagnétique provenant d'au moins un équipement émetteur/récepteur 5. D'autres champs électromagnétiques sont rayonnés dans cette zone provenant du même type d'équipements émetteur/récepteur 3,4,5. Les moyens de mesure de l'équipement de référence 1 effectuent une mesure de l'intensité de chaque champ électromagnétique reçu, et identifie le champ électromagnétique émis par un identifiant unique. Cette identifiant unique identifie le champ électromagnétique mais aussi l'équipement émetteur/récepteur 3,4,5.

Les moyens de traitements de l'équipement de référence réalisent par la suite une détermination de la valeur de référence R à un instant t donné.

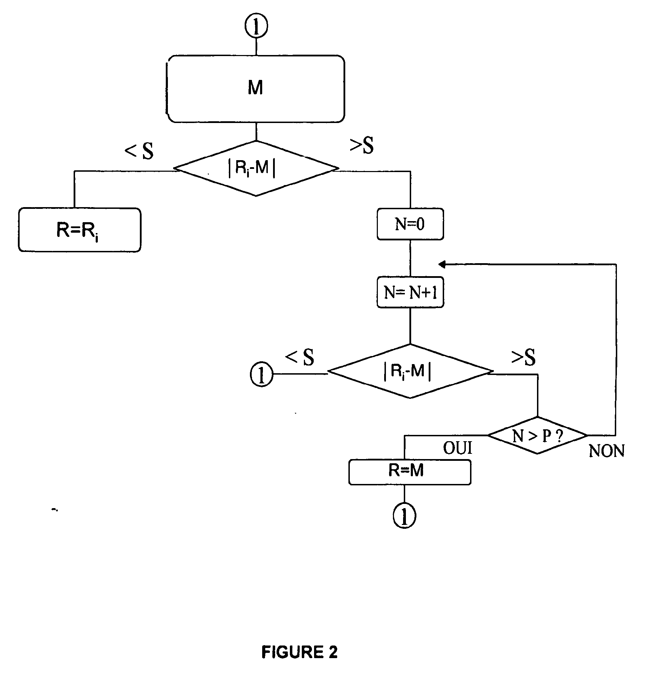

Cette détermination de la valeur R est décrite à la figure 2. L'équipement de référence 1 effectue des mesures de manière régulière de champs électromagnétiques environnants. Pour un champ électromagnétique, une mesure M est réalisée. Les moyens de traitement de l'équipement mettent en oeuvre un programme permettant de déterminer si la valeur de référence R doit :
- restée inchangée c'est-à-dire R=Rᵢ, avec Rᵢ correspondant à la valeur précédente de R pour le champ électromagnétique mesuré, ou
- être égale à la mesure M effectuée.

Dans ce contexte les moyens de traitement de l'équipement détermine l'écart absolu entre la mesure M et la valeur de référence Rᵢ c'est à dire |Rᵢ-M|. Lorsque la valeur de cet écart est inférieure à une valeur seuil S la valeur de référence R reste inchangée et donc R=Rᵢ.

S est un paramètre système configurable se rapportant à un écart relatif entre la valeur de référence et la valeur de la mesure M, dont la valeur par défaut est de l'ordre de 20%.
Lorsque cette valeur de l'écart est supérieure à la valeur seuil S, les moyens de traitement dudit équipement effectue une nouvelle mesure M du champ et réalise par la suite sur la base de la nouvelle mesure M une détermination de l'écart en effectuant à nouveau une comparaison de la valeur de cet écart avec celui de la valeur du seuil S. Si cette nouvelle valeur de l'écart est supérieure à la valeur seuil S, une autre mesure est effectuée pour un autre cycle de comparaison. Un nombre P de cycle peut être effectué. Ce nombre P est configurable. Si à la suite de ce nombre P de cycle de comparaison la valeur de l'écart est toujours supérieure à celle du seuil alors la valeur de référence sera égale à celle de la dernière mesure M du champ soit R=M. Dans le cas contraire la valeur de référence restera inchangée et donc R=Rᵢ.

La valeur de référence R peut être égal à la somme des champs supérieur à un valeur plancher de base, selon une métrique. Par exemple selon l'invention, un champs reçu d'une BTS n'est considéré que si sa puissance est supérieure à - 85 dBm, sinon il n'est pas considéré. Un équipement recevant trois champs de valeur - 65 dBm, -70 dBm et -80 dBm alors, pour une métrique de pure somme arithmétique, la valeur de R correspondra à : R= -65-70-80= -215 dBm.

En outre, bien qu'en toute rigueur, le procédé soit indépendant de la métrique choisie pour déterminer la référence R et la mesure M du terminal, le choix d'une métrique peut influer sur son efficacité. Une liste de métriques simples à mettre en oeuvre est donnée ci-dessous.
Somme arithmétique des valeurs des champs H mesurés, soit H1+ H2 +...H+...Hn.
Somme des carrés des valeurs des champs H mesurés, soit H1²+H2²+....+Hi²+....Hn²
Sommes pondérées: La liste des champs mesurés ayant été ordonnée en fonction de la puissance de réception, un coefficient de pondération Ci est affecté à chacun des champs mesurés en fonction de son rang dans la liste. Les sommes arithmétiques et des carrées sont alors pondérées et leurs expressions mathématiques deviennent:
- Arithmétique: C1H1+C2H2+...+CiHi+....CnHn ;
- Carrés: C1H1²+C2H2²+...+CiHi²+....CnHn²

Lorsque la valeur de référence R est déterminée les moyens de traitement génère un message comprenant la liste comprenant les identifiants uniques relatifs aux champs électromagnétiques reçus (ou cellules), la valeur de la mesure et de référence seuil pour chacun des champs. Ce message est envoyé aux terminaux mobiles associés à l'équipement de référence.

Si aucune nouvelle valeur de référence seuil est nouvelle, l'équipement de référence n'envoie pas de message aux terminaux mobiles.

Dès que le message est reçu par un terminal mobile, une mise à jour des valeurs de référence est effectuée par les moyens de traitement du terminal mobile. Seul sont mise à jour les valeurs seuil des champs électromagnétiques pour lesquelles le terminal possède les identifiants uniques. Le terminal mobile effectue une mesure de chaque champ électromagnétique reçu et détermine leur identifiant unique respectif. Ces champs électromagnétiques émanent d'équipements émetteur/récepteur environnants.

Les moyens de traitement du terminal mobile permettent de déterminer la localisation dudit terminal mobile à partir de la comparaison de la différence entre la mesure du champ électromagnétique d'un des équipements environnants ayant un identifiant correspondant à l'identifiant dudit équipement récepteur émetteur et la valeur de la référence, avec la valeur.

Plus précisément les moyens de traitement du terminal permettent de définir une variable Loc correspondant aux trois modes d'états suivants:
- hors zone,
- en zone, et
- incertitude.
Le terminal réalise périodiquement des mesures de champs électromagnétiques reçus. La période peut correspondre à celle du cycle de mesure réalisé par le terminal ou pour le moins à celle recommandée par les normes 3GPP/3GPP2.
Deux paramètres sont définis pour le changement d'état:
- Dmin : Si la valeur absolue de l'écart entre la Mesure M et la référence R est inférieure à Dmin, le terminal est En Zone,
- Dmax: Si l'écart absolu entre M et la référence est supérieur à Dmax, le terminal est considéré Hors Zone, et
- Si l'écart absolu est compris entre Dmin et Dmax, une incertitude dans la localisation du terminal par rapport à la zone de référence est établie, et la variable Loc est positionnée à incertitude.

Dans ce mode de réalisation, la localisation dudit terminal mobile 2 par rapport à la zone de référence 6 est déterminé par les moyens de traitement du terminal à partir de l'écart absolu |R-Mₜ| comparé aux valeurs Dmin et Dmax de sorte que si |R-Mₜ| < Dmin le terminal mobile se trouve dans la zone de référence 6 et si |R-Mₜ| > Dmax le terminal mobile se trouve hors de la zone de référence 6.

Ainsi la transmission d'au moins une communication est réalisée soit par réseau domestique soit par réseau mobile selon que la localisation du terminal mobile 2 est, respectivement, dans la zone de référence 6 ou hors de cette zone.

On peut noter, que les champs électromagnétiques mesurés doivent correspondre à la liste des champs décrits dans le message envoyé par l'équipement de référence. Si tel n'est pas le cas le terminal est considéré comme étant dans l'état hors zone, sinon l'écart est déterminé à partir des cellules communes à la liste fournie par l'équipement de référence et ceux qui sont mesurés par le terminal.
En fonction des critères précédemment énoncés, lorsque le terminal est conduit à changer d'état, il le notifie à l'équipement de localisation en lui envoyant un message par exemple par SMS ou par un lien de données de type Gprs/Edge ou 3G.

Lorsqu'un équipement de communication tel qu'un PABX, IPPBX, Serveur FMC, Call manager reçoit une communication entrante à destination d'un utilisateur d'un terminal mobile compris dans une architecture FMC à numéro unique, l'équipement de communication envoi une requête à l'équipement de référence afin de connaître l'état du terminal mobile : hors zone, en zone ou encore incertitude.

En fonction de l'état transmis par l'équipement de référence 1 à l'équipement de communication, ce dernier peut entreprendre les actions les plus pertinentes pour joindre le destinataire de l'appel, à savoir:
- hors zone: Routage de l'appel vers le terminal mobile uniquement,
- incertitude: Alerte simultanée du poste fixe et du terminal mobile,
- en zone: Alerte du poste fixe uniquement.
Ainsi, un utilisateur dans une architecture FMC peut être joint sur la base d'un numéro (ou identifiant) unique.

L'invention n'est pas limitée aux exemples de réalisation décrits et illustrés. Elle n'est en outre pas limitée à ces exemples d'exécution et aux variantes décrites.

Ainsi, il est entendu que l'invention peut s'inscrire dans tous types de systèmes et/ou de procédés dans lesquels l'équipement de référence est relié en réseau à d'autres équipements de mesures afin de partager des données se rapportant notamment aux mesures de champs électromagnétiques identifiés.

## Revendications

1. Procédé de communication par localisation d'un terminal mobile (2,7,8) en fonction d'une zone de référence (6), ladite zone étant disposée dans un champ électromagnétique provenant d'au moins un équipement émetteur/récepteur (3,4,5) et comprenant un équipement de référence (1), **caractérisé en ce que** ledit procédé comprend les étapes suivantes :
- transmission réitérée par l'équipement de référence (1) au terminal mobile (2) des données relatives au champ électromagnétique d'au moins un des équipements émetteurs/récepteurs (3,4,5), lesdites données se rapportant à une valeur de référence R de champ électromagnétique, une mesure courante M de ce champ électromagnétique et à un identifiant pour chaque équipement émetteur/récepteur,
- mesure Mₜ par le terminal mobile (2) du champ électromagnétique provenant d'au moins un des équipements émetteurs/récepteurs environnants (3,4,5) identifié(s) par son identifiant,
- localisation dudit terminal mobile (2) par rapport à la zone de référence (6) en fonction de l'écart absolu |R-Mₜ| comparé à des valeurs Dmin et Dmax de sorte que si |R-Mₜ| < Dmin le terminal mobile (2) se trouve dans la zone de référence (6) et si |R-Mₜ| > Dmax le terminal mobile (2) se trouve hors de la zone de référence (6), et
- transmission d'au moins une communication soit par réseau domestique soit par réseau mobile selon que la localisation du terminal mobile (2) est, respectivement, dans la zone de référence (6) ou hors de cette zone selon l'étape précédente.

2. Procédé selon la revendication 1, dans lequel la valeur de référence R est modifiée ou inchangée si respectivement, l'écart absolu |Rᵢ-M| est inférieur ou supérieur à un seuil S, la valeur M étant une mesure courante du champ électromagnétique réalisée par l'équipement de référence.

3. Procédé selon la revendication 2, dans lequel lorsque l'écart absolu |Rᵢ-M| est supérieur à S, cet écart est calculé pour un nombre successif de mesures M afin de vérifier à chaque mesure si la valeur de référence R est modifiée ou inchangée au regard de la valeur seuil S.

4. Procédé selon l'une quelconque des revendications précédentes, dans lequel R est égal à la somme des champs supérieur à un valeur plancher de base, selon une métrique.

5. Procédé selon l'une quelconque des revendications précédentes, dans lequel les valeurs minimale et maximale Dmin et Dmax sont des paramètres systèmes configurables.

6. Procédé selon l'une quelconque des revendications précédentes dans lequel ledit terminal n'est pas situé dans la zone de référence, si au moins un équipement émetteur/récepteur n'est pas identifié à la fois par le terminal et l'équipement de référence.

7. Procédé selon l'une quelconque des revendications précédentes dans lequel, ledit terminal mobile envoi audit équipement de référence des données se rapportant à sa localisation par rapport à la zone de référence.

8. Procédé selon l'une quelconque des revendications précédentes dans lequel, ladite valeur plancher est un paramètre configurable dont la valeur par défaut est égale à - 85 dBm.

9. Système de communication par localisation d'un terminal mobile (2,7,8) en fonction d'une zone de référence (6), pour la mise en oeuvre du procédé selon l'une quelconque des revendications précédentes et comprenant un équipement de référence (1), au moins un équipement émetteur/récepteur (3,4,5) et un terminal mobile (2), ladite zone (6) étant disposée dans un champ électromagnétique provenant d'au moins un de ces équipements émetteur/récepteur (3,4,5), et comprenant un équipement de référence (1), **caractérisé en ce que** l'équipement de référence comporte des moyens de liaison permettant d'envoyer des données avec ledit terminal mobile (2), ledit terminal mobile (2) comprenant :
- des moyens de mesure de champ électromagnétique provenant d'au moins un équipement émetteur/récepteur environnant (3,4,5);
- des moyens de mémoire permettant de stocker lesdites données reçues correspondant à une valeur de référence R et un identifiant dudit équipement émetteur/récepteur (3,4,5), et les mesures réalisées par ledit terminal (2) ; et
- des moyens de traitement de déterminer la localisation dudit terminal mobile (2) par rapport à la zone de référence (6) en fonction de l'écart absolu 1 R-Mₜ| comparé à des valeurs Dmin et Dmax de sorte que si |R-Mₜ| < Dmin le terminal mobile (2) se trouve dans la zone de référence (6) et si |R-Mₜ| > Dmax le terminal mobile (2) se trouve hors de la zone de référence (6),
ledit équipement de référence (1) comprenant des moyens de communication permettant de réaliser la transmission d'au moins une communication soit par réseau domestique soit par réseau mobile selon que la localisation du terminal mobile (2) est, respectivement, dans la zone de référence (6) ou hors de cette zone.

10. Système selon la revendication précédente, comprenant un commutateur téléphonique relié audit équipement de référence (1).

11. Système selon l'une quelconque des revendications 9 ou 10, dans lequel ledit équipement de référence (1) comprend un module de communication compatible avec les normes de téléphonie mobile.

12. Système selon l'une quelconque des revendications 9 à 11, dans lequel ledit équipement de référence (1) comprend des moyens de mesure du champ électromagnétique.

## Claims

1. Method of communication by locating a mobile terminal (2,7,8) as a function of a reference zone (6), said zone being disposed in an electromagnetic field originating from at least one sender/receiver apparatus (3,4,5) and comprising a reference apparatus (1), **characterized in that** said method comprises the following steps:
- repeated transmission by the reference apparatus (1) to the mobile terminal (2) of the data relating to the electromagnetic field of at least one of the sender/receiver apparatuses (3,4,5), said data pertaining to a reference value R of electromagnetic field, a current measurement M of this electromagnetic field and to an identifier for each sender/receiver apparatus,
- measurement Mₜ by the mobile terminal (2) of the electromagnetic field originating from at least one of the surrounding sender/receiver apparatuses (3,4,5) identified by its identifier,
- location of said mobile terminal (2) with respect to the reference zone (6) as a function of the absolute deviation |R-Mₜ| compared with values Dmin and Dmax so that if |R-Mₜ| < Dmin the mobile terminal (2) lies in the reference zone (6) and if |R-Mₜ| > Dmax the mobile terminal (2) lies outside of the reference zone (6), and
- transmission of at least one communication either by domestic network or by mobile network depending on whether the location of the mobile terminal (2) is, respectively, in the reference zone (6) or outside of this zone according to the previous step.

2. Method according to Claim 1, in which the reference value R is modified or unchanged if respectively, the absolute deviation |Rᵢ-M| is less than or greater than a threshold S, the value M being a current measurement of the electromagnetic field carried out by the reference apparatus.

3. Method according to Claim 2, in which, when the absolute deviation |Rᵢ-M| is greater than S, this deviation is calculated for a successive number of measurements M so as to verify at each measurement whether the reference value R is modified or unchanged in regard to the threshold value S.

4. Method according to any one of the preceding claims, in which R is equal to the sum of the fields that is greater than a base floor value, according to a metric.

5. Method according to any one of the preceding claims, in which the minimum and maximum values Dmin and Dmax are configurable system parameters.

6. Method according to any one of the preceding claims, in which said terminal is not situated in the reference zone, if at least one sender/receiver apparatus is not identified at one and the same time by the terminal and the reference apparatus.

7. Method according to any one of the preceding claims, in which said mobile terminal dispatches to said reference apparatus data pertaining to its location with respect to the reference zone.

8. Method according to any one of the preceding claims, in which, said floor value is a configurable parameter whose default value is equal to -85 dBm.

9. System for communication by locating a mobile terminal (2,7,8) as a function of a reference zone (6), for the implementation of the method according to any one of the preceding claims and comprising a reference apparatus (1), at least one sender/receiver apparatus (3,4,5) and one mobile terminal (2), said zone (6) being disposed in an electromagnetic field originating from at least one of these sender/receiver apparatuses (3,4,5), and comprising a reference apparatus (1), **characterized in that** the reference apparatus comprises link means making it possible to dispatch data with said mobile terminal (2), said mobile terminal (2) comprising:
- means for measuring an electromagnetic field originating from at least one surrounding sender/receiver apparatus (3,4,5);
- memory means making it possible to store said data received corresponding to a reference value R and an identifier of said sender/receiver apparatus (3,4,5), and the measurements carried out by said terminal (2); and
- processing means for determining the location of said mobile terminal (2) with respect to the reference zone (6) as a function of the absolute deviation |R-Mₜ| compared with values Dmin and Dmax so that if |R-Mₜ| < Dmin the mobile terminal (2) lies in the reference zone (6) and if |R-Mₜ| > Dmax the mobile terminal (2) lies outside of the reference zone (6),
said reference apparatus (1) comprising communication means making it possible to carry out the transmission of at least one communication either by domestic network or by mobile network depending on whether the location of the mobile terminal (2) is, respectively, in the reference zone (6) or outside of this zone.

10. System according to the preceding claim, comprising a telephonic switch linked to said reference apparatus (1) .

11. System according to any one of Claims 9 or 10, in which said reference apparatus (1) comprises a communication module compatible with the mobile telephone standards.

12. System according to any one of Claims 9 to 11, in which said reference apparatus (1) comprises means for measuring the electromagnetic field.

## Patentansprüche

1. Kommunikationsverfahren zur Lokalisierung eines mobilen Endgeräts (2, 7, 8) in Abhängigkeit von einer Referenzzone (6), wobei die Zone in einem elektromagnetischen Feld angeordnet ist, das von wenigstens einer Sender/Empfänger-Einrichtung (3, 4, 5) herrührt und eine Referenzeinrichtung (1) umfasst, **dadurch gekennzeichnet, dass** das Verfahren die folgenden Schritte umfasst:
- wiederholte Übertragung durch die Referenzeinrichtung (1) an das mobile Endgerät (2) von Daten mit Bezug auf das elektromagnetische Feld wenigstens eines der Sender/Empfänger-Einrichtungen (3, 4, 5), wobei sich die Daten auf einen Referenzwert (R) des elektromagnetischen Feldes, eine laufende Messung M dieses elektromagnetischen Feldes und auf ein Kennzeichen für jede Sender/Empfänger-Einrichtung beziehen,
- wobei die Messung Mₜ durch das mobile Endgerät (2) des elektromagnetischen Feldes von wenigstens einem der umliegenden Sender/Empfänger-Einrichtungen (3, 4, 5) stammt, die durch ihr/ihre Kennzeichen identifiziert wird/werden,
- Lokalisierung des mobilen Endgeräts (2) in Bezug zu der Referenzzone (6) in Abhängigkeit von der absoluten Abweichung |R-Mₜ| im Vergleich zu den Werten Dmin und Dmax, derart, dass, wenn |R-Mₜ|<Dmin, sich das mobile Endgerät (2) in der Referenzzone (6) befindet, und, wenn |R-Mₜ|>Dmax, sich das mobile Endgerät (2) außerhalb der Referenzzone (6) befindet, und
- Übertragung wenigstens einer Kommunikation entweder über Festnetz oder Mobilfunknetz, je nachdem, ob die Lokalisierung des mobilen Endgeräts (2) gemäß dem vorhergehenden Schritt in der Referenzzone (6) bzw. außerhalb dieser Zone erfolgt.

2. Verfahren nach Anspruch 1, in welchem der Referenzwert R modifiziert oder ausgetauscht wird, wenn jeweils die absolute Abweichung |R_{I}-M| kleiner oder größer als ein Schwellenwert S ist, wobei der Wert M ein laufendes Maß des elektromagnetischen Feldes ist, das durch eine Referenzeinrichtung hergestellt wird.

3. Verfahren nach Anspruch 2, in welchem, wenn die absolute Abweichung |R_{I}-M| größer als S ist, diese Abweichung für eine aufeinanderfolgende Zahl von Messungen M berechnet wird, um so für jede Messung zu verifizieren, ob der Referenzwert R im Hinblick auf den Schwellenwert S modifiziert oder ausgetauscht wird.

4. Verfahren nach einem der vorhergehenden Ansprüche, in welchem R gemäß einer Metrik gleich der Summe der Felder ist, die größer als der Basis-Mindestwert sind.

5. Verfahren nach einem der vorhergehenden Ansprüche, in welchem die minimalen und maximalen Werte Dmin und Dmax für Systeme konfigurierbare Parameter sind.

6. Verfahren nach einem der vorhergehenden Ansprüche, in welchem das Endgerät nicht in der Referenzzone liegt, wenn wenigstens eine Sender/Empfänger-Einrichtung nicht gleichzeitig durch das Endgerät und die Referenzeinrichtung identifiziert wird.

7. Verfahren nach einem der vorhergehenden Ansprüche, in welchem das mobile Endgerät an die Referenzeinrichtung Daten sendet, die sich auf seine Lokalisierung in Bezug zur Referenzzone beziehen.

8. Verfahren nach einem der vorhergehenden Ansprüche, in welchem der Mindestwert ein konfigurierbarer Parameter ist, dessen Wert abgerundet gleich -85 dBm ist.

9. Kommunikationssystem zur Lokalisierung eines mobilen Endgeräts (2, 7, 8) in Abhängigkeit von einer Referenzzone (6), zur Durchführung des Verfahrens nach einem der vorhergehenden Ansprüche und mit einer Referenzeinrichtung (1), wenigstens einer Sender/Empfänger-Einrichtung (3, 4, 5) und einem mobilen Endgerät (2), wobei die Zone (6) in einem elektromagnetischen Feld angeordnet ist, das von wenigstens einer der Sender/Empfänger-Einrichtungen (3, 4, 5) stammt, und mit einer Referenzeinrichtung (1),
**dadurch gekennzeichnet, dass** die Referenzeinrichtung Verbindungsmittel aufweist, welche erlauben, Daten mit dem mobilen Endgerät (2) auszutauschen, wobei das mobile Endgerät (2) aufweist:
- eine Messeinrichtung für das elektromagnetische Feld, das von wenigstens einer umgebenden Sender/Empfänger-Einrichtung (3, 4, 5) stammt;
- eine Speichereinrichtung, welche ermöglicht, die empfangenen Daten zu speichern, die mit einem Referenzwert R und einem Kennzeichen der Sender/Empfänger-Einrichtung (3, 4, 5) korrespondieren, und die Messungen, die durch das Endgerät (2) durchgeführt werden; und
- eine Behandlungseinrichtung zum Bestimmen der Lokalisierung des mobilen Endgeräts (2) in Bezug zu der Referenzzone (6) in Abhängigkeit von einer absoluten Abweichung |R-Mₜ| im Vergleich zu Werten Dmin und Dmax, derart, dass, wenn |R-Mₜ|<Dmin, sich das mobile Endgerät (2) in der Referenzzone (6) befindet, und, wenn |R-Mₜ|>Dmax, sich das mobile Endgerät (2) außerhalb der Referenzzone (6) befindet,
wobei die Referenzeinrichtung (1) eine Kommunikationseinrichtung umfasst, die es erlaubt, die Übertragung wenigstens einer Kommunikation entweder über das Festnetz oder das mobile Funknetz durchzuführen, derart, dass die Lokalisierung des mobilen Endgeräts (2) entweder in der Referenzzone (6) oder außerhalb dieser Zone ist.

10. System nach dem vorhergehenden Anspruch, mit einem Telefonschalter, der mit der Referenzeinrichtung (1) verbunden ist.

11. System nach einem der Ansprüche 9 oder 10, in welchem die Referenzeinrichtung (1) ein Kommunikationsmodul umfasst, das mit den Normen der mobilen Telefonie kompatibel ist.

12. System nach einem der Ansprüche 9 bis 11, in welchem die Referenzeinrichtung (1) eine Messeinrichtung des elektromagnetischen Feldes umfasst.
